# EUROPEAN PATENT APPLICATION

(11) **EP 2 595 159 A2**
(43) Date of publication of application: **22.05.2013**
(21) Application number: 12190231.6
(22) Date of filing: 26.10.2012
(51) Int. Cl.: H01B 13/08

(54) **Wrapped wire for electric machine**

(30) Priority: 18.11.2011 US 201113300417
(71) Applicant: Remy Technologies, LLC, Pendleton, IN 46064 (US)
(72) Inventor: Hamer, Colin J, Nobelsville, IN Indiana 46060 (US)
(74) Representative: Roberts, Peter David

(57) **Abstract**

A method of insulating a conductor wire comprises the steps of providing an electrically conductive core having a longitudinal axis and applying an electrical insulation material (58, 62) to an outer surface of the core (50). The method further comprises the steps of elevating the temperature (78) of the electrical insulation material and applying external pressure (80, 90) to the electrical insulation material to facilitate adhesion with the core.

## Description

### BACKGROUND AND SUMMARY OF THE DISCLOSURE

The present invention relates generally to electric machines having conductor wires and, more particularly, to a method of insulating the conductor wires of a stator assembly within electric machines.

Electric machines may be used for a variety of applications, including in connection with automobile power trains. For example, a conventional automobile may use an electric machine as a starting motor for an internal combustion engine, or as an alternator to generate electricity and deliver power to vehicle accessories and/or charge a vehicle's battery.

An illustrative electric machine includes a rotor and a stator. The stator is comprised of a stator stack and a plurality of conductor wires, or windings, that are inserted into the stator stack. The stator interacts with the rotor through magnetic fields to convert electric energy to mechanical energy, or to convert mechanical energy to electric energy.

The windings may be comprised of a conductive core and an electrical insulation surrounding the core. Typical electrical insulation may include an enamel coating that is applied to the core before inserting the windings into the stator stack. Another form of electrical insulation is a wrap or tape comprised of an insulation material which is wrapped around the conductive core before inserting the windings into the stator stack.

The conductive core may have a circular or rectangular cross-section. A conductive core with a circular cross-section may facilitate adhesion of an electrical insulation tape because the force and resulting pressure applied to the tape as it is wrapped around the conductive core is substantially uniform. Conversely, the pressure may be uneven or non-uniform when the electrical insulation tape is wrapped around a conductive core having a non-circular, illustratively rectangular, cross-section. As such, the adhesion of the electrical insulation tape may be diminished at particular locations or along particular sides of the conductive core with a rectangular cross-section (e.g., along the sides of the core with greater surface area). More particularly, because tension (force) within electrical insulation the tape is substantially constant during application to the conductive core and pressure is an inverse function of conductive core surface area, the pressure applied to the tape may be less along the sides of the core with greater surface area. Alternatively, and similar to a conductive core having a circular cross-section, when the surface areas of all sides of the rectangular conductive core are equal, then the pressure applied to the electrical insulation tape may be substantially uniform.

The present disclosure relates to a method of insulating a conductor wire. The illustrative method comprises the steps of providing an electrically conductive core having a longitudinal axis and applying an electrical insulation material to an outer surface of the core. The illustrative method further comprises the steps of elevating the temperature of the electrical insulation material, and applying external pressure to the electrical insulation material to facilitate adhesion with the core.

According to another illustrative embodiment of the present disclosure, a method of insulating a conductor wire is disclosed as including the steps of providing an electrically conductive core having a non-circular cross-section, and applying at least a first layer of an electrical insulation wrap around the core. The illustrative method further comprises the steps of heating the electrical insulation wrap, and applying external pressure to the electrical insulation wrap.

A further illustrative method of the present disclosure includes the steps of providing an electrically conductive core, and applying a first layer of an electrical insulation wrap around the core. The illustrative method further comprises the step of applying a second layer of the electrical insulation wrap around the first layer. Additionally, the illustrative method includes the step of pressing the first and second layers of the electrical insulation wrap to the core.

According to a first aspect of the invention there is provided a method of insulating a conductor wire, comprising the steps of: providing an electrically conductive core having a longitudinal axis, applying an electrical insulation material to an outer surface of the core, elevating the temperature of the electrical insulation material and applying external pressure to the electrical insulation material to facilitate adhesion with the core.

The step of elevating the temperature may cause melt flow of the electrical insulation material.

The electrical insulation material may be an electrical insulation wrap.

The electrical insulation wrap may include a first layer applied around the core and a second layer applied around the first layer.

The step of applying the electrical insulation material may include wrapping the first layer of the electrical insulation wrap around the core at an angle of approximately 130° to approximately 170° relative to the longitudinal axis of the core.

The step of applying the electrical insulation material may include wrapping the second layer of the electrical insulation wrap around the first layer at an angle of approximately 10° to approximately 45° relative to the longitudinal axis of the core.

The step of applying external pressure to the electrical insulation material may include moving the conductor wire through a rotatably supported first roller and an opposing rotatably supported second roller.

The first roller may apply pressure to the electrical insulation material in a first direction and the second roller may apply pressure to the electrical insulation material in a second direction, the second direction being transverse to the longitudinal axis of the core and the first direction.

According to a second aspect of the invention there is provided a method of insulating a conductor wire, comprising the steps of: providing an electrically conductive core having a non-circular cross-section, applying at least a first layer of an electrical insulation wrap around the core, heating the electrical insulation wrap and applying external pressure to the electrical insulation wrap.

The electrical insulation wrap may include a coupling portion proximate the core and comprised of one of a melt flow material and an adhesive material.

The step of heating the electrical insulation wrap may cause the coupling portion of the electrical insulation wrap to melt flow.

The steps of heating the electrical insulation wrap and applying pressure to the electrical insulation wrap may occur simultaneously.

The step of heating the electrical insulation wrap may occur prior to the step of applying pressure to the electrical insulation wrap.

The step of applying external pressure may include pressing the electrical insulation wrap from a first direction perpendicular to a longitudinal axis of the core and pressing the electrical insulation wrap from a second direction transverse to the longitudinal axis of the core and the first direction.

The method may further comprise coupling the conductor wires with a stator assembly of an electric machine.

The core may have a rectangular cross-section.

According to a third aspect of the invention there is provided a method of adhering electrical insulation to a conductor wire of an electric machine, comprising the steps of: providing an electrically conductive core, applying a first layer of an electrical insulation wrap around the core, applying a second layer of the electrical insulation wrap around the first layer and pressing the first and second layers of the electrical insulation wrap to the core.

The method may further comprise heating the first and second layers of the electrical insulation wrap.

Each of the first and second layers of the electrical insulation wrap may include an inner surface and an outer surface. The inner surface of the first layer may be proximate the core, and the inner surface of the second layer may be proximate the outer surface of the first layer. At least one of the inner surface of the first layer and the inner surface of the second layer may include one of a melt flow material and an adhesive coating configured to melt flow during the step of heating the first and second layers.

A temperature of the step of heating the first and second layers may be approximately equal to a melt flow temperature of at least one of the inner surface of the first layer of the electrical insulation wrap and the inner surface of the second layer of the electrical insulation wrap.

The core may have a rectangular cross-section.

The core may have a square cross-section.

The electric machine may include a stator assembly.

The steps of applying the first and second layers of electrical insulation wrap may include wrapping the first layer around the core at an angle of approximately 130° to approximately 170° relative to a longitudinal axis of the core, and wrapping the second layer around the first layer at an angle of approximately 10° to approximately 45° relative to the longitudinal axis of the core.

Additional features and advantages of the present invention will become apparent to those skilled in the art upon consideration of the following detailed description of the illustrative embodiment exemplifying the best mode of carrying out the invention as presently perceived.

### BRIEF DESCRIPTION OF THE DRAWINGS

The foregoing aspects and many of the intended advantages of this invention will become more readily appreciated as the same becomes better understood by reference to the following detailed description when taken in conjunction with the accompanying drawings.

FIG. 1A is a perspective view of an insertion end of an illustrative stator assembly;

FIG. 1B is a perspective view of a connection end of the illustrative stator assembly of FIG. 1A;

FIG. 2 is a partial cross-sectional view of the illustrative stator assembly, taken along line 2-2 of FIG. 1B;

FIG. 3 is a partial cross-sectional view of conductor wires in the illustrative stator assembly, taken along line 3-3 of FIG. 2;

FIG. 4 is a front perspective view of a conductor wire of the illustrative stator assembly having a generally U-shaped configuration;

FIG. 5 is a longitudinal cross-sectional view of a portion of the conductor wire of FIG. 4, showing a conductive core surrounded by an insulation portion;

FIGS. 6A-6C show illustrative steps for insulating the conductive core of the conductor wire;

FIG. 7 is a perspective view of an end of the conductor wire of FIG. 4 having a second layer of insulation wrap surrounding a first layer of insulation wrap (shown in phantom);

FIG. 8 is a schematic representation of an illustrative insulation apparatus of the present disclosure;

FIG. 9A is a front elevational view of the conductor wire moving through a first pair of rollers of the illustrative insulation apparatus of FIG. 8;

FIG. 9B is a side elevational view of the conductor wire moving through the first pair of rollers of FIG. 9A;

FIG. 10A is a front elevational view of the conductor wire moving through a second pair of rollers of the illustrative insulation apparatus of FIG. 8; and

FIG. 10B is a top plan view of the conductor wire moving through the second pair of rollers of FIG. 10A.

Corresponding reference characters indicate corresponding parts throughout the several views. Although the drawings represent embodiments of various features and components according to the present disclosure, the drawings are not necessarily to scale and certain features may be exaggerated in order to better illustrate and explain the present disclosure. The exemplifications set out herein illustrate embodiments of the invention, and such exemplifications are not to be construed as limiting the scope of the invention in any manner.

### DETAILED DESCRIPTION OF THE DRAWINGS

For the purposes of promoting an understanding of the principles of the invention, reference will now be made to the embodiments illustrated in the drawings, which are described below. The embodiments disclosed below are not intended to be exhaustive or limit the invention to the precise form disclosed in the following detailed description. Rather, the embodiments are chosen and described so that others skilled in the art may utilize their teachings. It will be understood that no limitation of the scope of the invention is thereby intended. The invention includes any alterations and further modifications in the illustrated devices and described methods and further applications of the principles of the invention which would normally occur to one skilled in the art to which the invention relates.

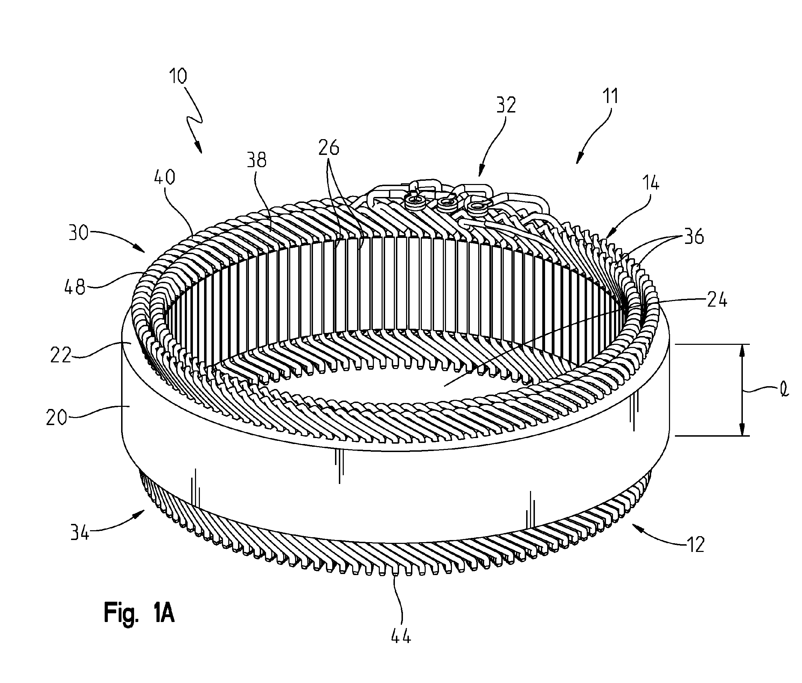

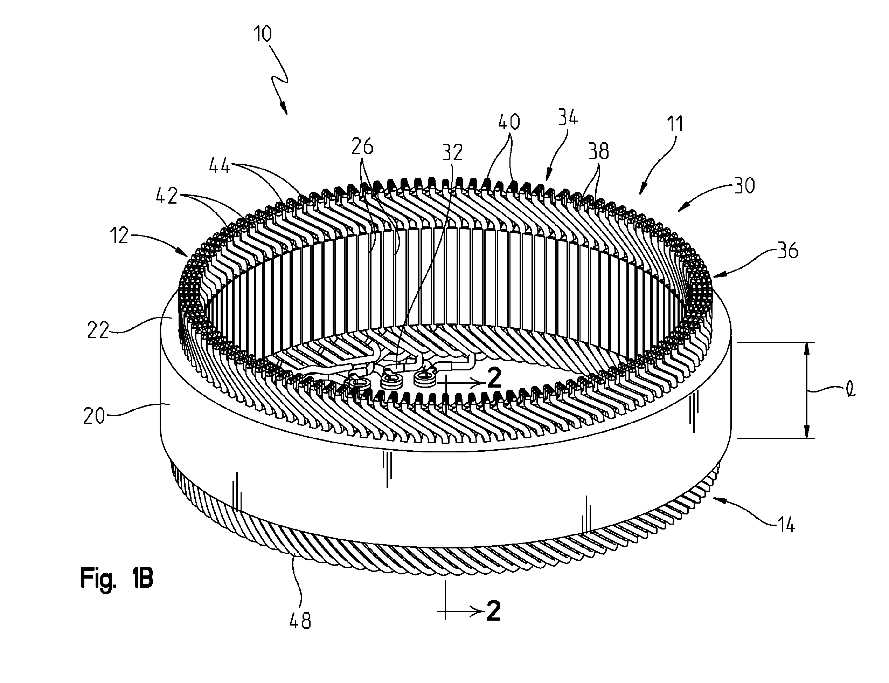

Referring initially to FIGS. 1A and 1B, an illustrative stator assembly 10 of an electric machine 11 is shown. More particularly, FIG. 1A shows an insertion end 14 of the stator assembly 10 and FIG. 1B shows a connection end 12 of the stator assembly 10. The electric machine 11 when used as a motor (such as a starting motor or traction motor) includes the stator assembly 10 operably coupled to a rotor (not shown) for converting electric energy to mechanical energy. The electric machine 11 may also be used as an alternator or generator to generate electric energy and deliver power, for example, to vehicle accessories and/or to charge a vehicle's battery.

The stator assembly 10 is illustratively comprised of a support or stator stack 20, and a plurality of conductor wires, or windings 34. The stator stack 20 includes a cylindrical wall 22 having an open center portion 24. The cylindrical wall 22 may include one or more lamination stacks or layers. The cylindrical wall 22 may be comprised of silicone steel, which reduces hysteresis and eddy current losses during operation of the electric machine 11. Alternatively, the cylindrical wall 22 may be comprised of a solid powered metal body. Furthermore, the stator stack 20 may include a metal (e.g., steel) frame (not shown).

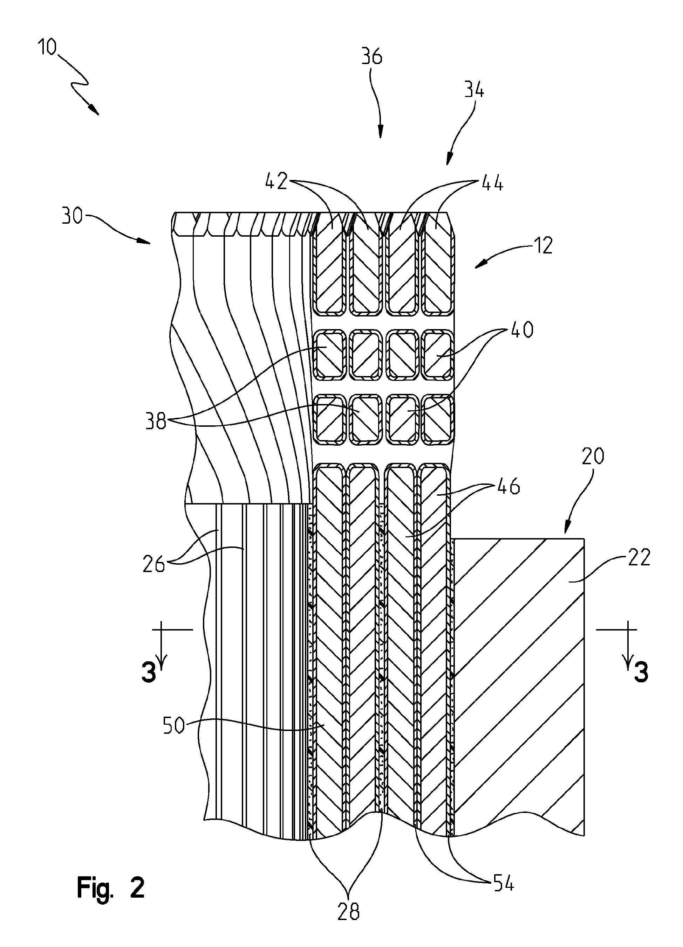

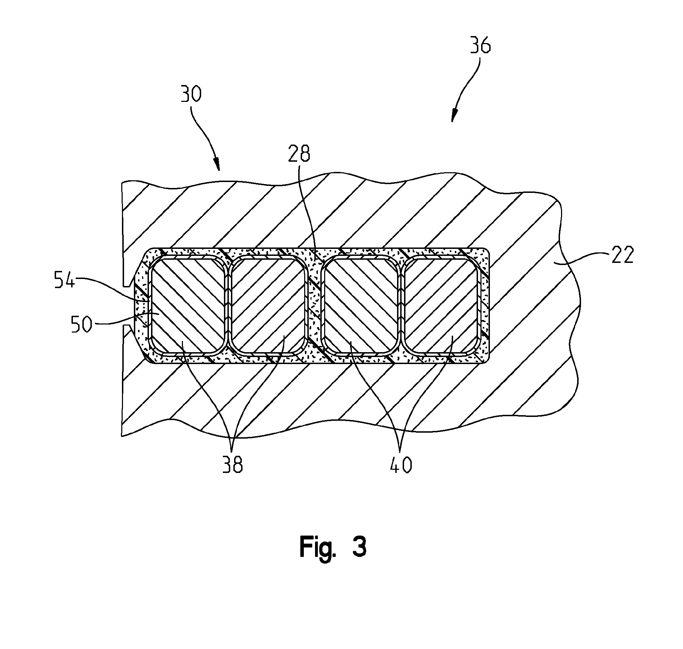

With respect to FIGS. 2 and 3, the cylindrical wall 22 of the stator stack 20 illustratively includes 120 circumferentially-spaced, axially-extending slots 26 through which the conductor wires 34 are received; however other numbers of slots 26 may be utilized, for example 60 or 240. More particularly, each illustrative slot 26 has a rectangular cross-section to support the ends of the conductor wires 34. The slots 26 may each include an insulating material or fill 28 (e.g., varnish, foam, gel, spray) that fills voids or spaces between the conductor wires 34 and the cylindrical wall 22 of the stator stack 20, along with voids between conductor wires 34.

Alternatively, the cylindrical wall 22 may include a plurality of radially-spaced slots 26 forming a plurality of concentric rows or layers. As further detailed herein, the slots 26 each illustratively support at least a portion of conductor wires 34. The slots 26 extend along the length l of the cylindrical wall 22 of the stator stack 20.

As disclosed in FIGS. 1A and 1B, the stator assembly 10 includes a commons region 30 and a specials region 32, which are comprised of the conductor wires 34. The specials region 32 indicates the type and configuration of the stator assembly 10. As is known in the art, the conductor wires 34 within the specials region 32 may include neutral conductor wires, phase conductor wires, and cross-over conductor wires. The specials region 32 also may include other conductor wires 34.

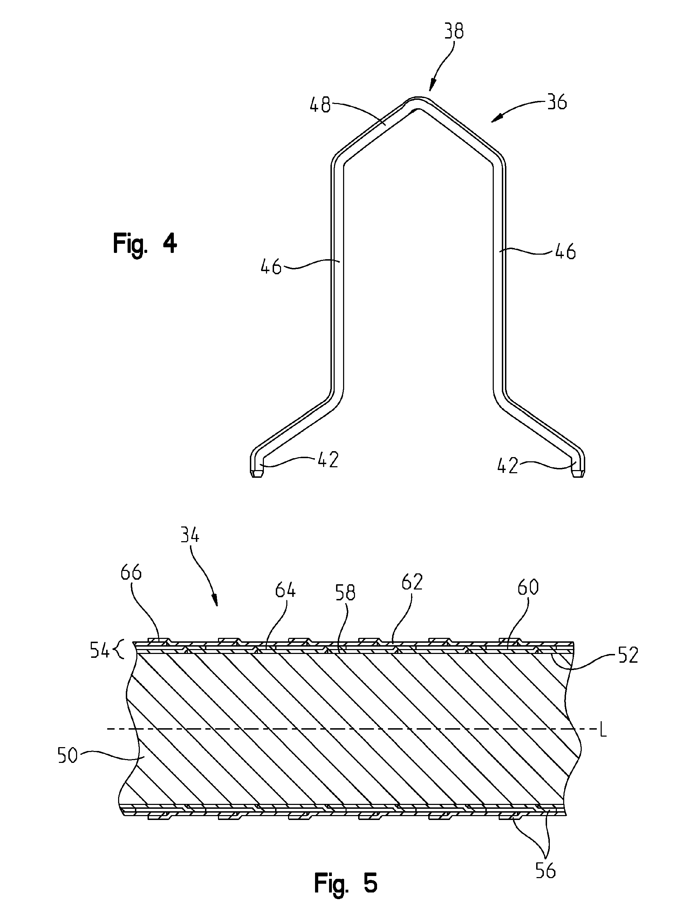

The conductor wires 34 within the commons region 30 include a plurality of commons conductor wires 36 positioned within slots 26 of the stator stack 20. Referring to FIG. 4, a single commons conductor wire 36 is shown. The commons conductor wires 36 may have different maximum voltage capacities (e.g., approximately 120 volts (V)). Additionally, the operational temperature of the common conductor wires 36 may be from approximately -44° F (approximately -42° C) to approximately 428° F (approximately 220° C).

Illustratively, the commons conductor wires 34 have a rectangular or other rectilinear cross-section (FIG. 4) to improve the efficiency of the electric machine 11 by increasing the slot-fill-ratio (SFR) of the electric machine 11. The SFR is a comparison of the aggregate cross-sectional area of bare copper conductors in one of the slots 26 and the cross-sectional area of the slot 26 itself. If the electric machine 11 has a high SFR, the cross-sectional area of the conductor wires 34 reduces the phase resistance and the resistance of the conductor wires 34 (i.e., power loss) for a given size of the slots 26. Conductor wires 34 illustratively have a rectangular cross-section, rather than a circular cross-section, in order to contribute to a higher SFR for the electric machine 11. Therefore, the efficiency of the electric machine 11 may be improved.

Illustratively, FIGS. 2 and 3 disclose that the commons region 30 of the stator assembly 10 includes a plurality of inner commons conductor wires 38 and a plurality of outer commons conductor wires 40. The illustrative embodiment of the present disclosure includes 120 inner commons conductor wires 38 and 120 outer commons conductor wires 40. A typical stator assembly 10 may include different numbers of commons conductor wires 36 (e.g., 60 commons conductor wires 36 or 240 commons conductor wires 36), depending on the desired power, magnetic, and other operational requirements of the stator assembly 10.

The ends 42 of the inner commons conductor wires 38 and the ends 44 of the outer commons conductor wires 40 illustratively extend from the connection end 14 of the stator assembly 10 (FIGS. 1A, 1B). Each commons conductor wire 36 may be bent or shaped into a more compact configuration during assembly of the stator assembly 10. The commons conductor wires 36 may be shaped according to the teachings of U.S. Patent 6,894,417 to Cai et al., which issued on May 17, 2005, and is assigned to Remy Inc. of Anderson, IN, the disclosure of which is expressly incorporated by reference herein. More particularly, the commons conductor wires 36 are bent to form a hairpin-shape, or U-shape (FIG. 4), however, the commons conductor wires 36 may be bent into other shapes. Referring further to FIG. 4, the illustrative hairpin shape of one of the inner commons conductor wires 38 defines two legs 46 extending from a U-shaped end turn 48 and terminating at ends 42. The illustrative outer commons conductor wires 40 have the same general shape as the inner commons conductor wires 38. As shown in FIGS. 1A and 1B, the U-shaped end turn 48 is exposed at the insertion end 14 of the stator assembly 10. The legs 46 of the commons conductor wires 36 may be bent in a clockwise or counter-clockwise direction to form the end turn 48.

With reference to FIGS. 2 and 3, each end 42, 44 of the commons conductor wires 36 is received within one of the slots 26 of the stator stack 20 such that each end 42, 44 is staggered, or "interleaved" (i.e., positioned through a different slot 26 with respect to adjacent commons conductor wires 36). More particularly, the ends 42 of the inner commons conductor wires 38 are circumferentially staggered within a radially inward portion of the slot 26. Additionally, the ends 44 of the outer commons conductor wires 40 are circumferentially staggered within a radially outward portion of the slot 26.

Referring to FIG. 1B, the ends 42, 44 of the commons conductor wires 36 extending from the slots 26 are interconnected to form at least one circuit. Additionally, the commons conductor wires 36 are interconnected with the conductor wires 34 of the specials region 32 to complete the circuit. For example, the conductor wires 34 may interconnect to form a single-phase circuit, a two-phase circuit, or a three-phase circuit. More particularly, the conductor wires 34 may be interconnected through welding or other similar conventional techniques in order to form a circuit.

Referring to FIG. 5, the conductor wires 34 each illustratively include an electrically conductive portion or core 50 and an electrically non-conductive insulation portion 54. The conductor wires 34 are insulated from each other and the stator stack 20 in order to prevent the electric machine 11 from shorting out as current flows through the conductor wires 34. The conductive core 50 is comprised of an electrically conductive material, such as a metal (e.g., copper). As detailed above, the conductive core 50 may have a non-circular or rectilinear cross-section, illustratively rectangular, however, the conductive core 50 may have other cross-sectional shapes (e.g., circular).

The insulation portion 54 extends around an outer surface 52 of the conductive core 50 and is comprised of electrically insulating materials, such as polymers, paper, fiberglass sleeves, or Kevlar® brand aramid fibers (available from DuPont™). As shown in Fig. 5, the insulation portion 54 of the illustrative conductor wires 34 includes a plurality of layers. More particularly, the insulation portion 54 includes at least one section or layer of electrical insulation tape or wrap 56. Alternatively, the insulation portion 54 may include a layer of non-conductive coating intermediate the core 50 and the wrap 56, or applied to the outer surface of the wrap 56.

The material properties of the insulation portion 54 determine the operating environment of the conductor wires 34. The wrap 56 may be comprised of an electrically non-conductive material, such as at least one polymeric electrical insulation material, for example, polyimide-based materials, polyamide-imide-based materials, polyurethane-based materials, and polyester-based materials. For example, the wrap 56 may be a Kapton® polyimide film available from DuPont™. More particularly, the wrap 56 may include a coupling portion or layer forming an inner surface of the wrap 56, and a backing portion or layer forming an outer surface of the wrap 56. The coupling portion may be comprised of a polymeric material, such as a melt-flow material, an adhesive, a heat-sealable resin, or other similar material, and the backing portion may be a polyimide material, for example.

Illustratively, the wrap 56 is in solid form when applied to the core 50 and has a width substantially greater than its thickness. The wrap 56 may be wound or wrapped around the outer surface 52 of the core 50. The illustrative wrap 56 may have a thickness of approximately 0.001 inches (approximately 0.0254 millimeters), and a width of approximately 0.375 inches (approximately 10 millimeters) to approximately 0.5 inches (approximately 13 millimeters).

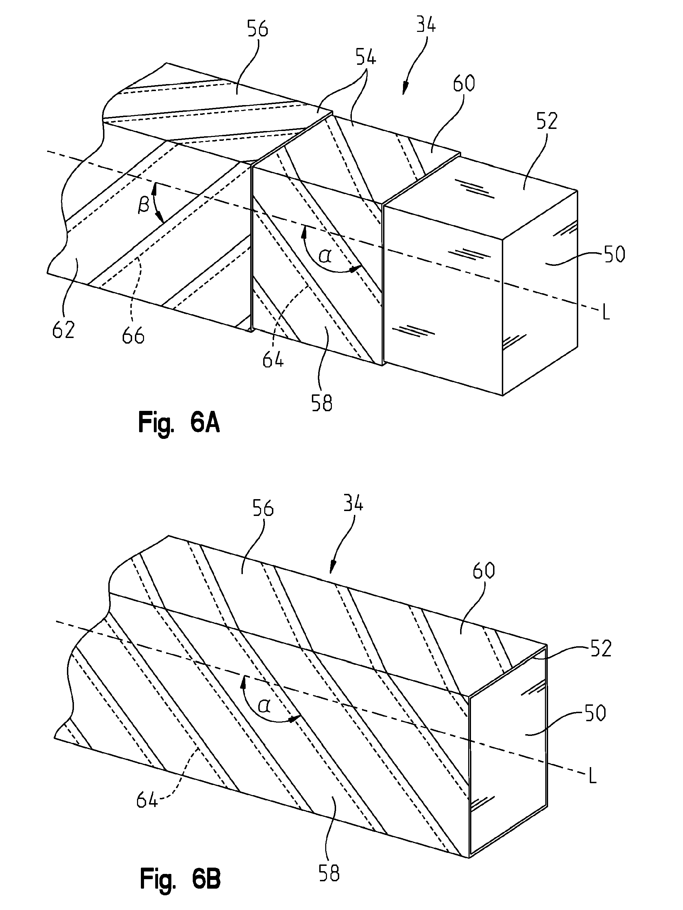

With reference to FIG. 6A, the illustrative insulation portion 54 may include at least a first or inner wrap layer 58 and a second or outer wrap layer 62. The first layer 58 is applied in a first orientation and the second layer 62 is applied in a second orientation. Alternatively, the first and second layers 58, 62 of wrap 56 may be applied in the same orientation. More particularly, the illustrative first layer 58 is applied to the conductive core 50 at an angle α with respect to a longitudinal axis L of the conductive core 50. The illustrative angle α of the first orientation may be greater than 0° and less than 180° relative to the longitudinal axis L. In certain illustrative embodiments, angle α may be between approximately 135° and approximately 170°, and is approximately 135° as shown in FIG. 6A. The illustrative second layer 62 of wrap 56 is applied to the first layer 58 at an angle β with respect to the longitudinal axis L of the core 50. The illustrative angle β of the second orientation may be greater than 0° and less than 180° relative to the longitudinal axis L. In certain illustrative embodiments, angle β may be between approximately 10° and approximately 45°, and is approximately 45° as shown in FIG. 6A. The angular orientations of the first and second layers 58 and 62 are illustratively offset by approximately 90° (as defined by angle α - β angle). It may be appreciated that the respective angular orientations of the first and second layers 58, 62 may be reversed, such that the angle α is between approximately 10°and approximately 45°, and the angle β may be between approximately 135° and approximately 170°.

An alternative embodiment of the insulation portion 54 of the present disclosure may include the first and/or second layers 58, 62 of wrap 56 applied coaxially with the longitudinal axis L of the conductive core 50, such that the orientation of the wrap 56 is parallel with the longitudinal axis L (i.e., the angles α, β of the first and second layers 58, 62, respectively, are approximately 0° and/or 180°). Another alternative embodiment includes both the first and second layers 58, 62 of wrap 56 applied perpendicularly from an upper side or a lower side of the conductive core 50.

The first and second layers 58, 62 of wrap 56 may be applied to the conductor wire 34 in an overlapping manner, as denoted by raised overlapped portions 64, 66 of the respective first and second layers 58, 62 of FIG. 5 and the phantom lines of FIGS. 6A-6C. More particularly, the first layer 58 of wrap 56 is illustratively applied to the core 50 such that each time the first layer 58 is wrapped around the core 50, the first layer 58 overlaps a portion of itself that was previously applied to the core 50. The overlapped portion 64 of the first layer 58 of wrap 56 ensures that the core 50 is not exposed and, therefore, that the conductor wire 34 is insulated. As such, the thickness of the overlapped portion 64 of the first layer 58 of wrap 56 may be twice the thickness of the first layer 58 in a non-overlapped portion. Likewise, the second layer 62 of wrap 56 is applied to an outer surface 60 of the first layer 58 of wrap 56 in the same overlapping manner to form the overlapped portions 66. The angular orientation of angles α, β, of the respective first and second orientations of the wrap 56 provide the desired overlapping, illustratively, approximately 10% to approximately 75% of overlap per layers 58, 62.

The illustrative insulation portion 54 may have a thickness of approximately 0.004 inches (approximately 0.1 millimeters) to approximately 0.008 inches (approximately 0.2 millimeters). The thickness of the insulation portion 54 is calculated by adding the thickness of the overlapped portion 64 of the illustrative first layer 58 of wrap 56 (e.g., approximately 0.025 millimeters x 2 = approximately 0.05 millimeters) to the thickness of the overlapped portion 66 of the illustrative second layer 62 of wrap 56 (e.g., approximately 0.025 millimeters x 2 = approximately 0.05 millimeters).

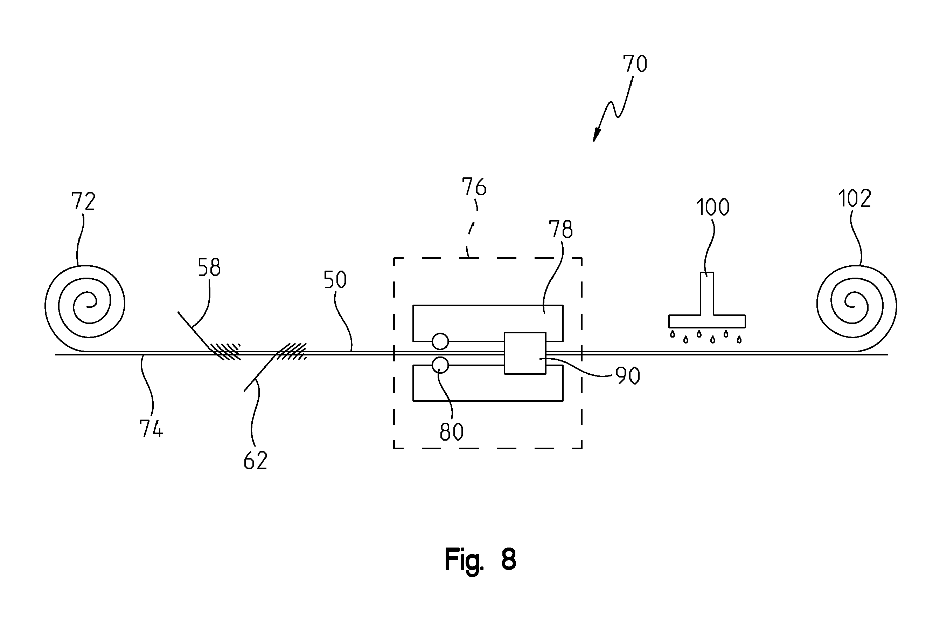

Referring to FIG. 8, the conductive core 50 may be insulated in the following illustrative steps. As shown in FIGS. 6A and 8, the insulation process begins with the conductive core 50. The conductive core 50 may initially be a bulk roll 72 of conductive wire that is unrolled and linearly passed through an insulation apparatus 70, for example, on a conveyor belt 74. The core 50 is wrapped with the first layer 58 of wrap 56 and subsequently wrapped with the second layer 62 of wrap 56. More particularly, the melt flow portion of the first layer 58 of wrap 56 may be applied to the outer surface 52 of the core 50 and the melt flow portion of the second layer 62 of wrap 56 may be applied to the outer surface 60 of the first layer 58. As shown in FIGS. 6A-6C and 8, the first layer 58 of wrap 56 is applied to the outer surface 52 (FIG. 6B) of the core 50 such that the first layer 58 of wrap 56 extends around the core 50 and completely covers the core 50. Illustratively, the first layer 58 of wrap 56 is wrapped at angle α to the longitudinal axis L of the core 50. The angle α may be approximately 0° to approximately 180° relative to the longitudinal axis L of the core 50 (e.g., 135° in Fig.6A). As the first layer 58 of wrap 56 is wrapped around the core 50, the first layer 58 overlaps the portion of the first layer 58 that was previously wrapped around the core 50. FIG. 6B discloses the overlapped portion 64 of the first layer 58 of wrap 56 in phantom. The overlapped portion 64 may include approximately 10% to approximately 75% overlapping.

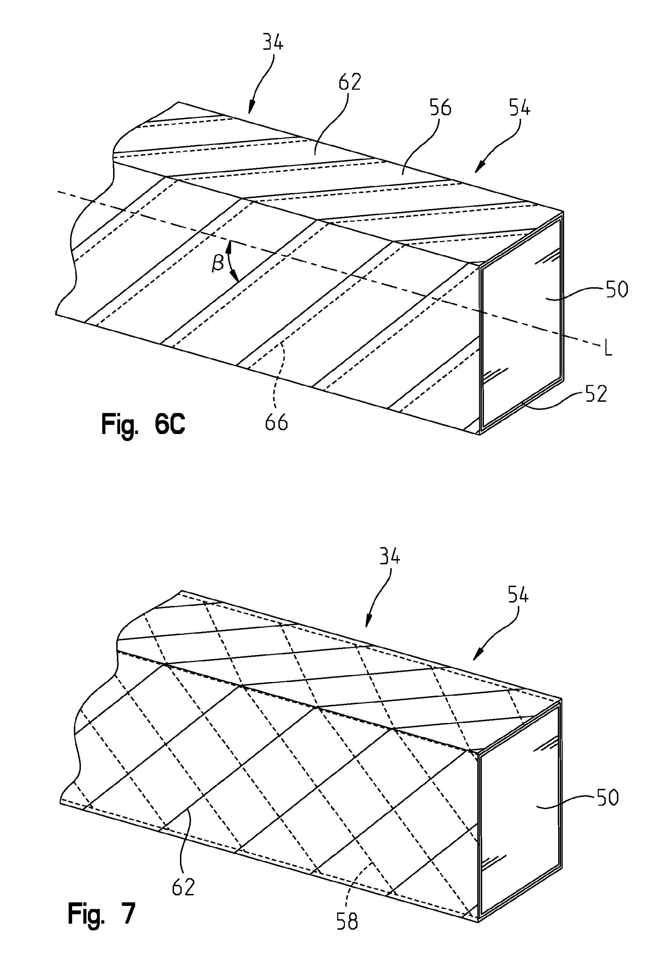

After wrapping the first layer 58 of wrap 56 around the core 50, the second layer 62 of wrap 56 is wrapped around the outer surface 60 of the first layer 58 of wrap 56, as shown in FIGS. 5, 6A, 6C, and 8. The second layer 62 of wrap 56 is wrapped at angle β to the longitudinal axis L of the conductive core 50. More particularly, the angle β may be approximately 0° to approximately 180° relative to the longitudinal axis L of the conductive core 50 (e.g., 45° in Fig. 6C). Illustratively, FIG. 7 shows that the first layer 58 of wrap 56 is angularly offset from the second layer 62 of wrap 56 by approximately 90°, such that the first layer 58 forms an X-shaped pattern with the second layer 62. Alternatively, the first and second layers 58, 62 of wrap 56 may be applied in the same orientation.

As the second layer 62 of wrap 56 is wrapped around the first layer 58 of wrap 56, the second layer 62 overlaps the portion of the second layer 62 that was previously wrapped around the first layer 58. FIG. 6C discloses the overlapped portion 66 of the second layer 62 of wrap 56 in phantom. The overlapped portion 66 may include approximately 10% to approximately 75% overlapping. The wrapping process may be repeated until the insulation portion 54 of the conductor wires 34 has the desired properties.

With the first layer 58 and second layer 62 of wrap 56 applied, the conveyor belt 74 causes the conductor wire 34 to pass through an oven 78 (e.g., infrared or convection oven) to heat the wrap 56, causing melt flow of at least a portion of the wrap 56, for example the melt flow portion of the first layer 58 and/or the second layer 62, to form a mechanical bond within the insulation portion 54 and adhere the insulation portion 54 to the core 50. For example, melt flow may occur when the illustrative conductor wire 34 is in the oven 78 for approximately 10 seconds while the oven 78 is operated at a temperature of approximately 650° F (approximately 343° C). However, it may be appreciated that the temperature of the oven 78 and the length of time that the conductor wire 34 is in the oven 78 are dependent upon the material properties of the wrap 56, and as such, may vary.

With reference to FIGS. 8-10, when the wrap 56 is in the melt flow state (i.e., at an elevated temperature), pressure is illustratively applied to the wrap 56 in order to increase adhesion between the first layer 58 of wrap 56 to the core 50 and the second layer 62 of wrap 56 to the first layer 58. Illustratively, the wrap 56 is pressed by at least one external pressing device. More particularly, the illustrative insulation apparatus 70 includes a first pressing device 80 and a second pressing device 90. The first and second pressing devices 80, 90 are forced toward each other, illustratively by springs, hydraulics, or pneumatics, for applying pressure to the wrap 56. The first pressing device 80 includes opposing cylindrical presses or rollers 80a and 80b, which are rotatably supported and spaced apart from each other. Similarly, the second pressing device 90 includes opposing presses or rollers 90a and 90b, which are rotatably supported and spaced apart from each other. The first and second pressing devices 80, 90 may include mechanical, hydraulic, or electrical means for adjusting the position of the rollers 80a, 80b, 90a, 90b relative to the wrap 56.

The first pressing device 80 is oriented perpendicularly to the second pressing device 90, with respect to the conveyor belt 74 and the core 50. As such, the illustrative first and second pressing devices 80, 90 apply forces to the wrap 56 in perpendicular directions relative to each other and the longitudinal axis L of the conductive core 50, as further detailed herein. More particularly, the first and second pressing devices 80, 90 apply pressure against opposing surfaces of the rectangular cross- section conductive core 50. As shown in FIG. 8, the first pressing device 80 is vertically spaced apart from the conveyor belt 74 and the conductor wire 34, such that the roller 80a is illustratively positioned above the conductor wire 34 and the roller 80b is positioned below the conductor wire 34. Conversely, the second pressing device 90 is laterally spaced apart from the conveyor belt 74 and the conductor wire 34, such that the roller 90a is positioned outwardly to one side of the conductor wire 34 and the roller 90b is positioned outwardly to the other side of the conductor wire 34. The diameter of exemplary first and second pressing devices 80, 90 may be approximately 0.5 inches-6.0 inches, and may vary to accommodate the size of the conductor wire 34. Additionally, the length of the rollers 80a, 80b is greater than the width of the conductor wire 34, and the length of the rollers 90a, 90b is greater than the height, or depth, of the conductor wire 34 in order to apply pressure to the entire surface of the wrap 56.

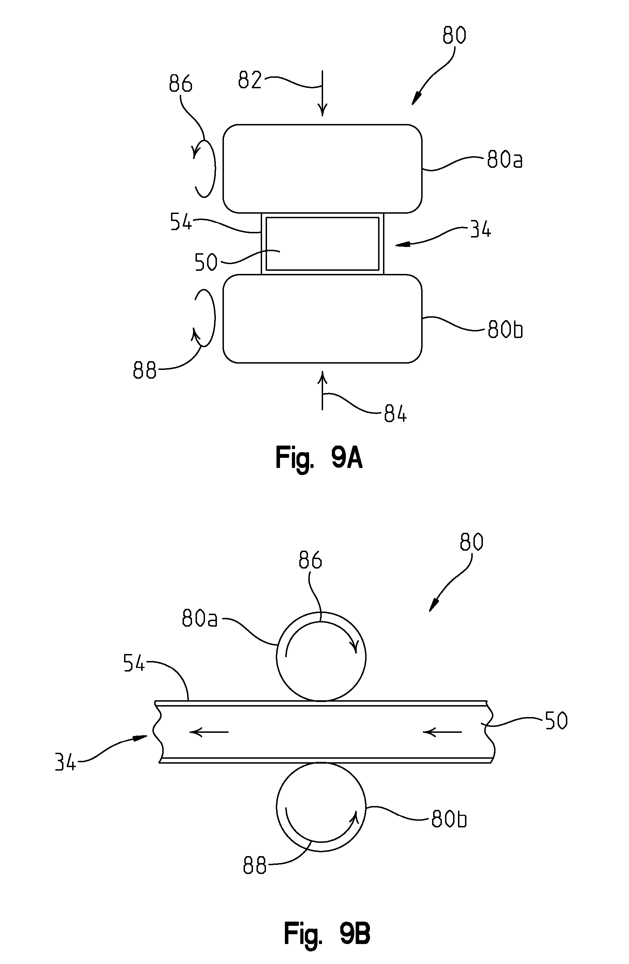

As shown in FIGS. 9A and 9B, with respect to the first pressing device 80, the rollers 80a, 80b rotate in opposite directions to facilitate the movement of the conductor wire 34 through the first pressing device 80. Illustratively, as shown in FIG. 9A, the roller 80a rotates in a direction 86 out of the page (i.e., clockwise from the side perspective view of FIG. 9B) and the roller 80b rotates in a direction 88 into the page (i.e., counterclockwise from a side perspective view of the roller 80b). The first pressing device 80 applies pressure to the wrap 56 in opposing direction 82, 84. More particularly, the roller 80a applies pressure to the wrap 56 in direction 82 and the roller 80b applies pressure to the wrap 56 in direction 84. Directions 82, 84 are vertically aligned with each other, such that the pressure applied by the first pressing device 80 is perpendicular to the longitudinal axis L of the core 50.

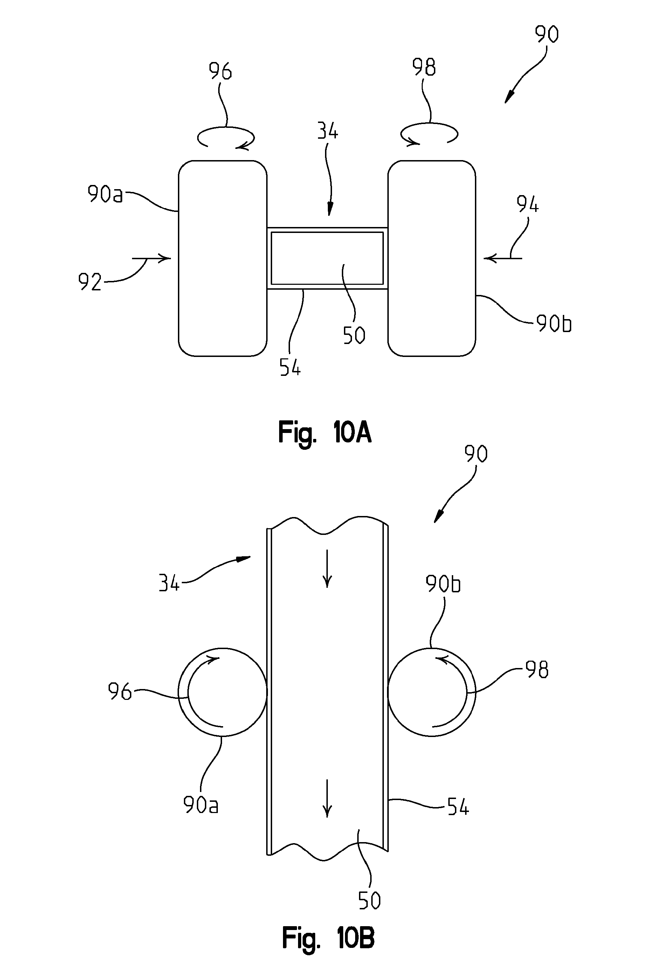

With respect to FIGS. 10A and 10B, the rollers 90a, 90b rotate in opposite directions to facilitate the movement of the conductor wire 34 through the second pressing device 90. Illustratively, the roller 90a rotates in a clockwise direction 96 and the roller 90b rotates in a counterclockwise direction 98. The second pressing device 90 applies pressure to the wrap 56 in opposing directions 92, 94. More particularly, the roller 90a applies pressure to the wrap in direction 92 and the roller 90b applies pressure to the wrap in direction 94. Directions 92, 94 are laterally aligned with each other, such that the pressure applied by the second pressing device 90 is transverse to the longitudinal axis L of the core 50 and the directions 82, 84 of pressure applied by the first pressing device 80.

The illustrative insulation apparatus 70 may include a housing 76 to encapsulate the oven 78 and the first and second pressing devices 80, 90 such that the wrap 56 may continue to be heated while being pressed. An alternative embodiment of the insulation apparatus 70 may remove the housing 76 such that the first and second pressing devices 80, 90 are positioned along the conveyor belt 74 subsequent to (downstream from) the oven 78. As such, the wrap 56 may begin to cool while being pressed by the first and second pressing devices 80, 90.

The first and second pressing devices 80, 90 apply pressure to the wrap 56 in order to increase adhesion of the first layer 58 of wrap 56 to the core 50 and the second layer 62 of wrap 56 to the first layer 58. Additionally, by heating the wrap 56, a mechanical bond may be formed within the insulation portion 54. Furthermore, pressing the wrap 56 may enhance the bond between the wrap 56 and the core 50 and between the first and second layers 58, 62 of wrap 56. As such, the reliability of the insulation portion 54 may be increased and the risk of a shorting event within the electric machine 11 may be decreased. By applying pressure to the wrap 56, the melt flow portion of the wrap 56 may spread or flow in a more consistent and uniform manner across the sides of the core 50, which may increase adhesion of the wrap 56 to all sides of the conductive core 50. The uniform pressure applied to the wrap 56 may increase the reliability of the insulation portion 54. Both the pressure applied to the wrap 56 by the pressing devices 80, 90, and the length of time that the wrap 56 is under pressure are dependent on the material properties of the wrap 56 and the size of the conductor wire 34. For example, each of the illustrative pressing devices 80, 90 may apply approximately 1.0-100.0 psi (pounds per square inch) of pressure to the wrap 56 for approximately 0.01-1.0 seconds.

The conductor wire 34 may be cooled after the first and second layers 58, 62 of wrap 56 are pressed by the first and second pressing devices 80, 90. For example, the conductor wire 34 may be water cooled by a showerhead 100 or other device that is positioned near the end of the insulation system 70. Illustratively, a single dynamic insulation system 70 insulates the core 50 and forms the conductor wire 34, however, a static or non-conveyor system, or other apparatus, may be used to achieve the same result. The conductor wire 34 may be rolled into a bulk roll 102 following the cooling step and stored for future use. Alternatively, the conductor wire 34 may continue to move along the conveyor belt 74 in order to be sized and cut to form the plurality of conductor wires 34 necessary to assemble the stator assembly 10.

After being insulated, the conductor wires 34 may be cut to the appropriate size for assembly with the stator stack 20. The ends 42, 44 of the conductor wires 34 are inserted into the slots 26 of the stator stack 20 at the insertion end 14 (FIG.1A) of the stator assembly 10. Furthermore, the conductor wires 34 may be bent to provide a more compact stator assembly 10. The ends 42, 44 of the conductor wires 34 extending outwardly from the connection end 12 (FIG. 1B) of the stator assembly 10 may be stripped, through conventional processes, to remove the insulation portion 54 and expose the core 50 of each end 42, 44. More particularly, the core 50 of each of the ends 42, 44 of the conductor wires 34 is exposed in order to weld, or otherwise interconnect, with adjacent ends 42, 44 and form a circuit. The conductor wires 34 may be coated with a varnish or other sealant, coating, film, or epoxy, in order to stabilize the conductor wires 34 within the stator stack 20.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method of insulating a conductor wire, comprising the steps of:
providing an electrically conductive core having a longitudinal axis;
applying an electrical insulation material to an outer surface of the core;
elevating the temperature of the electrical insulation material; and applying
external pressure to the electrical insulation material to facilitate adhesion with the core.

2. The method of claim 1, wherein the step of elevating the temperature causes melt flow of the electrical insulation material.

3. The method of claim 1, wherein the electrical insulation material is an electrical insulation wrap.

4. The method of claim 3, wherein the electrical insulation wrap includes a first layer applied around the core and a second layer applied around the first layer.

5. The method of claim 4, wherein the step of applying the electrical insulation material includes wrapping the first layer of the electrical insulation wrap around the core at an angle of approximately 130° to approximately 170° relative to the longitudinal axis of the core; wherein optionally
the step of applying the electrical insulation material includes wrapping the second layer of the electrical insulation wrap around the first layer at an angle of approximately 10° to approximately 45° relative to the longitudinal axis of the core.

6. The method of claim 1, wherein the step of applying external pressure to the electrical insulation material includes moving the conductor wire through a rotatably supported first roller and an opposing rotatably supported second roller; wherein optionally
the first roller applies pressure to the electrical insulation material in a first direction and the second roller applies pressure to the electrical insulation material in a second direction, the second direction being transverse to the longitudinal axis of the core and the first direction.

7. A method of insulating a conductor wire, comprising the steps of:
providing an electrically conductive core having a non-circular cross-section;
applying at least a first layer of an electrical insulation wrap around the core;
heating the electrical insulation wrap; and
applying external pressure to the electrical insulation wrap.

8. The method of claim 7, wherein the electrical insulation wrap includes a coupling portion proximate the core and comprised of one of a melt flow material and an adhesive material; wherein optionally
the step of heating the electrical insulation wrap causes the coupling portion of the electrical insulation wrap to melt flow.

9. The method of claim 7, wherein the steps of heating the electrical insulation wrap and applying pressure to the electrical insulation wrap occur simultaneously; or
wherein the step of heating the electrical insulation wrap occurs prior to the step of applying pressure to the electrical insulation wrap.

10. The method of claim 7, wherein the step of applying external pressure includes pressing the electrical insulation wrap from a first direction perpendicular to a longitudinal axis of the core and pressing the electrical insulation wrap from a second direction transverse to the longitudinal axis of the core and the first direction.

11. The method of claim 7, further comprising coupling the conductor wires with a stator assembly of an electric machine; or
wherein the core has a rectangular cross-section.

12. A method of adhering electrical insulation to a conductor wire of an electric machine, comprising the steps of:
providing an electrically conductive core;
applying a first layer of an electrical insulation wrap around the core;
applying a second layer of the electrical insulation wrap around the first layer; and
pressing the first and second layers of the electrical insulation wrap to the core.

13. The method of claim 12, further comprising heating the first and second layers of the electrical insulation wrap; wherein optionally
each of the first and second layers of the electrical insulation wrap includes an inner surface and an outer surface, the inner surface of the first layer is proximate the core, and the inner surface of the second layer is proximate the outer surface of the first layer, at least one of the inner surface of the first layer and the inner surface of the second layer includes one of a melt flow material and an adhesive coating configured to melt flow during the step of heating the first and second layers; wherein optionally
a temperature of the step of heating the first and second layers is approximately equal to a melt flow temperature of at least one of the inner surface of the first layer of the electrical insulation wrap and the inner surface of the second layer of the electrical insulation wrap.

14. The method of claim 12, wherein the core has a rectangular cross-section; wherein optionally
the core has a square cross-section.

15. The method of claim 12, wherein the electric machine includes a stator assembly; or
wherein the steps of applying the first and second layers of electrical insulation wrap include wrapping the first layer around the core at an angle of approximately 130° to approximately 170° relative to a longitudinal axis of the core, and wrapping the second layer around the first layer at an angle of approximately 10° to approximately 45° relative to the longitudinal axis of the core.
